# EUROPÄISCHE PATENTSCHRIFT

(11) **EP 2 821 218 B1**
(45) Veröffentlichungstag und Bekanntmachung des Hinweises auf die Patenterteilung: **28.10.2015**
(21) Anmeldenummer: 14184434.0
(22) Anmeldetag: 16.04.2011
(51) Int. Cl.: B31D 1/02, G09F 3/10, B32B 7/06, B32B 27/08, G09F 3/02

(54) **Verfahren zur Herstellung eines bedruckten Haftetikettenverbundes**
Method for producing a printed adhesive label composite
Procédé de fabrication d'un étiquette adhésive composite imprimée

(30) Priorität: 12.05.2010 DE 102010020209
(43) Veröffentlichungstag der Anmeldung: 07.01.2015
(62) Teilanmeldung aus: 11726677.5
(73) Patentinhaber: X-Label GmbH, 42653 Solingen (DE)
(72) Erfinder: Oberbeck, Jan, 53757 Sankt Augustin (DE)
(74) Vertreter: Patentanwälte Vomberg & Schart

(56) Entgegenhaltungen:
- EP-A1- 0 737 955
- US-A1- 2003 039 785
- US-A1- 2007 006 969

## Beschreibung

In einem weiteren Verfahrensschritt II wird das Trägermaterial 2 mit einer Silikonschicht 3 einseitig beschichtet. Auf diese Silikonschicht 3 wird anschließend ein Haftklebstoff 4 aufgetragen, wonach das beschichtete Trägermaterial 2 mit dem Obermaterial 1 verbunden wird. Alternativ hierzu kann der Kleber auch auf das Obermaterial aufgetragen werden, wonach der Verbund mit dem silikonisierten Träger hergestellt wird. Der so entstandene Haftetikettenverbund 5 kann sofort zu bedruckten Haftetiketten 6 weiterverarbeitet werden. Andererseits kann er auch auf Rollen aufgewickelt und gelagert bzw. zur weiteren Verarbeitung ausgeliefert werden. In beiden Fällen wird jedoch der Haftetikettenverbund 5 im Verfahrensschritt III zunächst bedruckt (Pfeil 7), wonach die einzelnen Haftetiketten 6 aus dem Haftetikettenverbund 5 herausgestanzt werden (Pfeil 8), ohne dabei das Trägermaterial 2 zu beschädigen. Aufgrund der auf dem Trägermaterial abgeschiedenen Silikonschicht und deren Oberflächeneigenschaften haftet der Haftkleber nur an dem Obermaterial, womit dieses als Haftetikett auf einer Verpackung aufgebracht werden kann.

Ein ähnliches Verfahren zur Herstellung von bandförmigem Haftetikettenmaterial wird in der DE 3403363 A1 beschrieben, wonach das als Etikettenmaterial bezeichnete Obermaterial vor oder nach dem Bedrucken mittels einer Reliefwalze mit Klebstoff beschichtet und anschließend mit der Trägerschicht verbunden wird. Nach dem unmittelbar folgenden Ausstanzen wird das fertige Etikettenmaterial zu Rollen aufgewickelt.

Die herkömmlichen Herstellungsverfahren von Haftetiketten sind insbesondere für solche Produkthersteller nachteilig, die große Mengen an Haftetiketten benötigen. Das liegt daran, dass die Haftetiketten als Werbeträger hohen optischen Ansprüchen genügen müssen, womit hochwertige und kostenintensive Druckmaschinen eingesetzt werden, die nur an wenigen Standorten zur Verfügung stehen. Haftetiketten, die nach einem herkömmlichen Verfahren hergestellt werden, besitzen aufgrund des mehrschichtigen Aufbaus allerdings ein hohes Gewicht, womit die resultierenden Transport- und Lagerkosten entsprechend hoch sind. Demgegenüber sind die Beschichtungsanlagen für die Silikon- und Klebstoffschichten sowie die Stanzanlagen vergleichsweise günstig.

Ferner sind aus US 2003/0039785 A1 haltbare und ablösbare Etiketten bekannt, die eine Wiederverwendung eines etikettierten Behälters begünstigen sollen.

EP 0 737 955 A1 beschreibt einen Haftetikettenverbund mit einem Obermaterial, das seinerseits aus zwei dünnen Materialschichten mit Dicken von wenigen Mikrometern zusammengesetzt ist, wo denen eines frontal oder revers bedruckt wird.

Ein weiterer Druckvorgang und ein Verfahren sowie eine Vorrichtung zur Herstellung eines Etiketts wird in US 2007/006969 A1 offenbart.

Es ist Aufgabe der vorliegenden Erfindung, die Nachteile der bekannten Herstellungsverfahren sowie die Nachteile der nach dem Stand der Technik bekannten Haftetikettenverbunde zu beheben. Insbesondere sollen Transport- und Lagerkosten minimiert werden.

Hierzu wird das Herstellungsverfahren nach Anspruch 1 vorgeschlagen. Erfindungsgemäß wird die erste Materialschicht vor dem Bedrucken auf eine Stabilisierungsschicht aufgebracht und nach dem Bedrucken von dieser abgetrennt und anschließend zu einer transport- und/oder lagerfähigen Rolle aufgewickelt. Aufgrund dieses Verfahrensablaufs ist es nunmehr möglich, die erste Materialschicht nach dem Bedrucken bis zur weiteren Verarbeitung zu lagern, wozu die bedruckten Schichten zu Rollen aufgewickelt werden. Das Aufbringen des Haftklebstoffs auf das Obermaterial oder auf das vergleichsweise schwere Trägermaterial und das Ausstanzen einzelner Haftetiketten mittels einer Stanzmaschine aus dem Haftetikettenverbund kann somit später und/oder sogar an einem anderen Ort durchgeführt werden. Durch die wesentlich geringere Masse sowie aufgrund des wesentlich geringeren Volumens des bedruckten Materials ergeben sich entsprechend geringere Transport- und/oder Lagerkosten.

Die Stabilisierungsschicht dient dabei zur Stabilisierung der sehr dünn ausgebildeten ersten Materialschicht während des Druckvorgangs, bei dem auf die Materialschicht Farbschichten aufgetragen werden, die wesentlich dicker sein können, als die erste Materialschicht selbst. Hierdurch ergibt sich eine höhere Qualität des entstandenen Druckbildes. Vorzugsweise wird zur Wiederverwendung der Stabilisierungsschicht nach dem Abtragen der ersten bedruckten Materialschicht eine weitere unbedruckte erste Materialschicht auf die Stabilisierungsschicht aufgebracht. Diese kann sofort oder ggf. später Bedruckt und entsprechend weiterverarbeitet werden.

Das erfindungsgemäße Verfahren ist insbesondere für international tätige Hersteller vorteilhaft, womit die Produktinformationen in verschiedenen Sprachen gedruckt werden müssen. In solchen Fällen bietet es sich an, die erste Materialschicht zunächst mit den aufwendig gestalteten Motiven zu bedrucken, die häufig länderübergreifend identisch ausgebildet sind. Die Produktinformationen können dann direkt vor Ort beim Hersteller auf die erste Materialschicht aufgetragen werden. Hierzu sind in der Maschine zum Auftragen der Silikon- und der Haftklebstoffschicht eine oder mehrere zusätzliche Druckstationen vorgesehen, die allerdings aufgrund des vergleichsweise einfachen Druckbildes einfach und somit kostenschonend ausgestaltet sein können.

Als bevorzugte Drucktechniken bieten sich für das erfindungsgemäße Verfahren insbesondere Flexodruck-, Offsetdruck-, Siebdruck- (flach und rotativ), Digitaldruck-, Buchdruck- oder Tiefdruckverfahren an. Vor allem beim Digitaldruck können alle gängigen Verfahren, wie beispielsweise Inkjet- oder Transferverfahren oder Verfahren auf Tonerbasis eingesetzt werden, wobei die vorliegende Erfindung hierauf nicht beschränkt ist.

Weitere bevorzugte Ausgestaltungen des erfindungsgemäßen Verfahrens werden im Folgenden sowie in den Unteransprüchen beschrieben.

Beim herkömmlichen Aufrollen der sehr dünn ausgebildeten ersten Materialschicht oder des ebenfalls dünnen Obermaterials entsteht das Problem, dass die bedruckten Flächen stets übereinander liegen, so dass die Rollen an den unbedruckten Stellen leicht eingedrückt werden können, womit sie dauerhaft ihre Form verlieren oder sogar einreißen können. Demnach ist nach einer bevorzugten Ausführungsform vorgesehen, dass beim Aufrollen der ersten Materialschicht oder des Obermaterials die Rolle in axialer Richtung oszillierend hin und her bewegt wird. Hierdurch wird beim Rollen eine gleichmäßige Schichtstärke über die gesamte Rollebreite erzielt, da das Druckbild in axialer Richtung nicht immer an derselben Position angeordnet ist, sondern quasi entlang der Oberfläche wandert.

Das erfindungsgemäße Verfahren eignet sich insbesondere für Haftetikettenverbunde, bestehend aus einem Obermaterial und einem Trägermaterial, die mittels eines Haftklebstoffs lösbar miteinander verbunden sind. Erfindungsgemäß besitzt das Obermaterial mindestens eine erste und eine zweite Materialschicht, die miteinander verbunden sind, wodurch es möglich ist mit dem erfindungsgemäßen Verfahren nur die erste Materialschicht zu bedrucken, die anschließend mit einer weiteren Materialsschicht eine Oberschicht bildet.

Vorzugsweise ist die erste Materialschicht eine transparente oder opake Folie oder ein Faserverbund, die aus einem oder mehreren Materialien besteht und bevorzugt eine Materialstärke von 9 µm bis 85 µm aufweist. Für die Reduzierung der Transport- und Lagerkosten ist es umso vorteilhafter, je dünner die erste Materialschicht ist.

Die zweite Materialschicht besteht ebenfalls vorzugsweise aus einer Folie, einem Faserverbund oder einem anderen Verbundmaterial und weist bevorzugt eine Materialstärke von 20 µm bis 800 µm auf. Diese Materialschicht dient mit seinen Eigenschaften dazu, der ersten Materialschicht als haftklebende Etikette die Übertragungsfunktion auf das Applikationsgut zu gewährleisten. Als weitere Materialien kommen gestrichene Papiere, gegossene, geblasene oder coextruierte Folien in transparent oder beispielsweise in weiß infrage. Die beiden Materialschichten werden vorzugsweise mit einem Kaschierklebstoff miteinander verbunden, der überall in den erforderlichen Mengen kostengünstig zu erhalten ist. Die Kaschierung wird bevorzugt mit einem Tiefdrucklösemittelverfahren durchgeführt, wobei aber auch andere Technologien zur Herstellung kaschierähnlicher Verbunde eingesetzt werden können.

Das Trägermaterial, oder auch Abdeckmaterial genannt, besteht vorzugsweise aus handelsüblichen vollsilikonisierten Materialien, wie beispielsweise Papier oder Kunststoff, die mit einer silikonisierten Oberfläche veredelt werden. Hiermit können die Obermaterialien mit einem Haftklebstoff rückstandsfrei abgelöst werden. Dieser Haftklebstoff ist beispielsweise ein Heißkleber (Hotmelt), wobei bevorzugt ein UV-vernetzter Heißkleber, ein Warmkleber oder ein Klebstoff verwendet wird, der mit einem thermischen Verfahren übertragen wird. Zum Auftragen des Klebstoffs werden bevorzugt Verfahren mit direktem Kontakt, wie beispielsweise per Schlitzdüsen oder Rollrakel-Schlitzdüsen, oder mit indirektem Kontakt, wie beispielsweise einem Curtain-Coater-Verfahren, eingesetzt.

Weitere bevorzugte Ausgestaltungen sowie konkrete Ausführungsformen der Erfindung werden im Folgenden anhand der Figuren erläutert. Dabei zeigt:

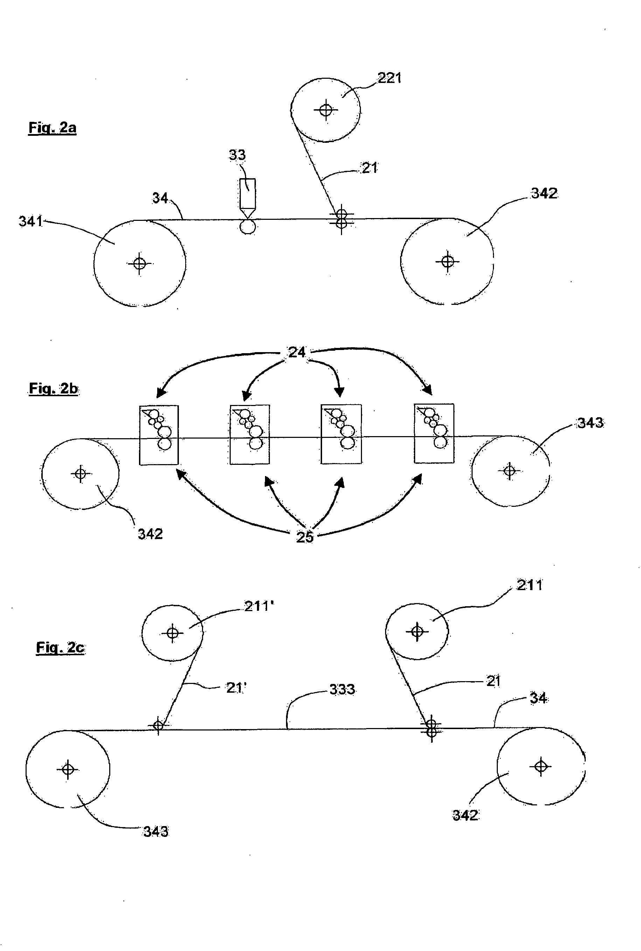

- Fig. 2a-c:: einen schematischen Verfahrensablauf zum Bedrucken einer ersten Materialschicht und

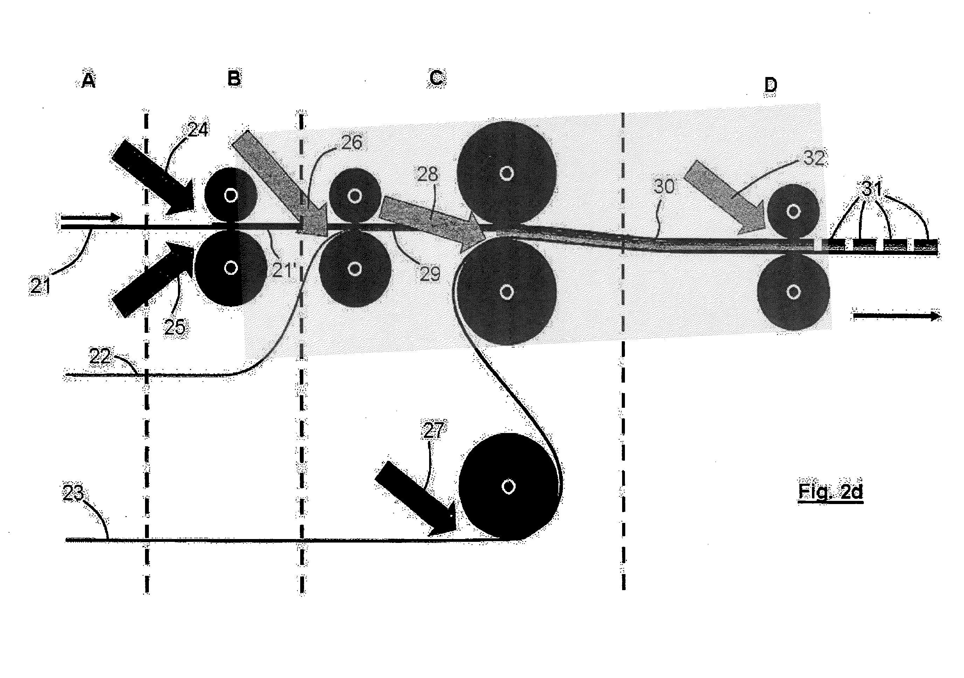

- Fig. 2d:: einen schematischen Verfahrensablauf zur weiteren Verarbeitung der ersten Materialschicht zu einem Haftetikett mit den Verfahrensschritten A bis D.

In einem ersten Verfahrensschritt A (Fig. 2d) werden sowohl die erste als auch die zweite Materialschicht 21, 22 sowie das Trägermaterial 23 hergestellt. Danach wird die erste Materialschicht 21 im zweiten Verfahrensschritt B (Fig. 2d) frontal 24 und/oder revers 25 bedruckt, wozu die erste Materialschicht 21 mittels eines Klebstoffs 33 vorübergehend auf eine Stabilisierungsschicht 34 aufgebracht wird (Fig. 2a). Frontales und reverses Bedrucken bedeutet dabei das Bedrucken der Materialschicht von vorne 24 bzw. von hintern 25. Sowohl die Stabilisierungsschicht 34 als auch die erste Materialschicht 21 sind hierzu auf Rollen 211, 341 aufgerollt und werden bis zur Weiterverarbeitung als Verbund zu einer Rolle 342 aufgewickelt. Danach kann der Verbund aus erster Materialschicht 21 und der Stabilisierungsschicht 34 bedruckt werden (Fig. 2b), wonach der bedruckte Verbund wiederum zu einer Rolle 343 aufgewickelt wird. Schließlich wird in einem weiteren Verfahrenschritt (Fig. 2c) die bedruckte erste Materialschicht 21' von der Stabilisierungsschicht 34 abgelöst, wobei die Klebstoffschicht 333 auf der Stabilisierungsschicht 34 haften bleibt, so dass sofort eine weitere unbedruckte erste Materialschicht 21 von einer Rolle 211 auf die Stabilisierungsschicht aufgebracht und zu dem Verbund 34 zusammengefügt werden kann. Danach kann ein weiterer Druckprozess beginnen.

Die sehr dünne erste bedruckte Materialschicht 21' kann nach dem oben beschriebenen Verfahren aufgewickelt und gelagert und/oder transportiert werden, so dass die übrigen Verfahrensschritte (C, D) ggf. an einem anderen Ort durchgeführt werden können. Hierdurch ergibt sich, dass nur die dünne bedruckte erste Materialschicht transportiert werden muss, weshalb sich insbesondere die Transportkosten um ein Vielfaches minimieren.

In einem dritten Verfahrensschritt C werden nacheinander die einzelnen Schichten miteinander verbunden, wobei zunächst die erste Materialschicht 21' mittels eines Kaschierklebstoffs 26 mit der zweiten Materialschicht 22 zu dem Obermaterial 29 verbunden wird. Parallel hierzu wird das Trägermaterial 23 zunächst mit Silikon 27 beschichtet und anschließend mittels eines Haftklebstoffs 28 mit dem Obermaterial 29 verbunden, so dass ein bedruckter Haftetikettenverbund 30 entsteht. Aus diesem werden im letzten Verfahrensschritt D einzelne Haftetiketten 31 herausgestanzt (Pfeil 32), die im aufgewickelten Zustand ausgeliefert werden. Später werden die Haftetiketten über eine Spendeeinrichtung auf die Güter bzw. auf die Produktverpackungen aufgebracht.

Die vorliegende Erfindung betrifft ein Verfahren zur Herstellung eines bedruckten Haftetikettenverbundes, bestehend aus einem Obermaterial und einem Trägermaterial, wobei das Obermaterial mittels eines Haftklebstoffs mit dem Trägermaterial verbunden wird, das Obermaterial eine erste und eine zweite Materialschicht besitzt und die erste Materialschicht zunächst frontal und/oder revers bedruckt wird und danach mittels eines Kaschierklebstoffs mit einer zweiten Materialschicht zu dem Obermaterial verbunden wird.

Haftetikettenverbunde der eingangs genannten Art werden üblicherweise zu einzelnen Haftetiketten weiterverarbeitet, die in bedruckter Form auf Verpackungen von diversen Produkten aufgebracht werden und somit den optischen Eindruck des verpackten Produkts prägen. Beispielsweise werden solche Haftetiketten auf Glas- oder Kunststoffflaschen, Dosen, Kisten oder auf anderen typischen Produktverpackungen aufgebracht.

Da nicht nur die Qualität des Produkts, sondern auch seine optische Aufmachung den Absatz bestimmt, sind heutige Haftetiketten sehr aufwendig gestaltet und zeigen neben den üblichen Hersteller- und Markenangaben sowie den produktbezogenen Informationen zahlreiche Designelemente, wie beispielsweise naturgetreue oder stilisierte Abbildungen der angebotenen Waren.

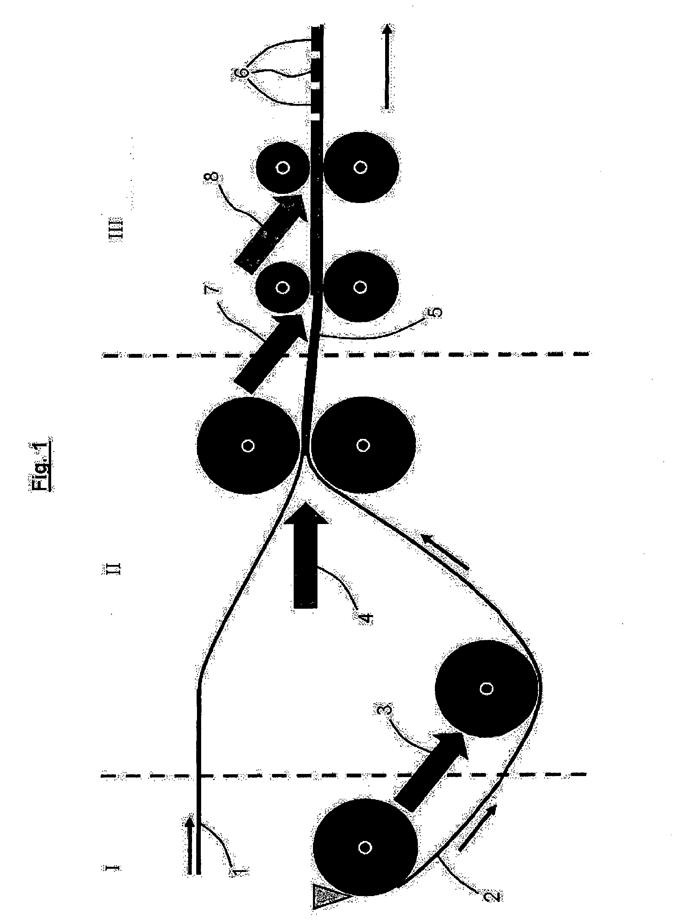

Zur Herstellung solcher Haftetiketten wird in der Regel ein Verfahren angewandt, welches schematisch in Fig. 1 dargestellt ist und sich grob in drei Verfahrensschritte I bis III gliedert. Zunächst wird ein Obermaterial 1 sowie ein Trägermaterial 2 hergestellt. In Abhängigkeit von der späteren Anwendung eignen sich hierzu unterschiedliche Materialien, wobei das Obermaterial 1 beispielsweise eine Folie sein kann. Das Trägermaterial 2 hingegen besteht beispielsweise aus Papier, Pappe, Kartonage oder Kunststoff.

## Patentansprüche

1. Verfahren zur Herstellung eines bedruckten Haftetikettenverbundes (30), bestehend aus einem Obermaterial (29) und einem Trägermaterial (23), wobei das Obermaterial (29) mittels eines Haftklebstoffs (28) mit dem Trägermaterial (23) verbunden wird, das Obermaterial (29) eine erste (21) und eine zweite Materialschicht (22) besitzt und die erste Materialschicht (21) zunächst frontal (24) und/oder revers (25) bedruckt wird und danach mittels eines Kaschierklebstoffs (26) mit einer zweiten Materialschicht (22) zu dem Obermaterial (29) verbunden wird,
**dadurch gekennzeichnet, dass**
die erste Materialschicht (21) vor dem Bedrucken auf eine Stabilisierungsschicht aufgebracht wird, nach dem Bedrucken von dieser abgetrennt wird und anschließend zu einer transport- und/oder lagerfähigen Rolle aufgewickelt wird.

2. Verfahren nach Anspruch 1, **dadurch gekennzeichnet, dass** zur Wiederverwendung der Stabilisierungsschicht nach dem Abtrennen der ersten bedruckten Materialschicht eine unbedruckte weitere erste Materialschicht auf die Stabilisierungsschicht aufgebracht wird.

## Claims

1. Process for production of a printed adhesive label laminate (30) comprising an upper (29) and a carrier material (23), whereby the upper (29) is connected with the carrier material (23) by a pressure sensitive adhesive (28), the upper (29) has a first (21) and a second material layer (22) and whereby the first material layer (21) is at first printed frontal (24) and/or reverse (25) and is thereafter connected by a laminating adhesive (26) with a second material layer (22) to build the upper (29),
**characterized in that**,
the first material layer (21) is brought on a stabilizing layer before the printing and is separated therefrom after the printing and is afterwards furled to a transportable or storable roll.

2. Process according to claim 1, **characterized in that**, a not printed further material layer is brought on the stabilizing layer after the separation of the first printed material layer to recycle stabilizing layer.

## Revendications

1. Procédé de fabrication d'un stratifié d'étiquette adhésive (30) imprimé se composant d'un matériau supérieur (29) et d'un matériau de support (23), dans lequel le matériau supérieur (29) est relié au moyen d'une colle auto-adhésive (28) audit matériau de support (23), le matériau supérieur (29) présente des première (21) et deuxième (22) couches de matériau, et la première couche de matériau (21) est imprimée d'abord sur la face avant (24) et/ou sur la face arrière (25) et est ensuite reliée au moyen d'une colle de stratification (26) à une deuxième couche de matériau (22) pour obtenir le matériau supérieur (29),
**caractérisé par le fait que**, avant l'impression, la première couche de matériau (21) est appliquée sur une couche de stabilisation, est détachée de celle-ci après l'impression et est ensuite enroulée pour former un rouleau apte à être transporté et/ou stocké.

2. Procédé selon la revendication 1, **caractérisé par le fait que**, pour la réutilisation de ladite couche de stabilisation après avoir détaché la première couche de matériau imprimée, une autre première couche de matériau non imprimée est appliquée sur la couche de stabilisation.
